# EUROPEAN PATENT APPLICATION

(11) **EP 4 571 907 A1**
(43) Date of publication of application: **18.06.2025**
(21) Application number: 23872635.0
(22) Date of filing: 29.09.2023
(51) Int. Cl.: H01M 8/1213, C25B 1/042, C25B 9/00, C25B 9/23, C25B 13/04, C25B 13/05, H01M 8/04, H01M 8/12

(54) **ELECTROCHEMICAL CELL, ELECTROCHEMICAL CELL DEVICE, MODULE, AND MODULE ACCOMMODATING DEVICE**

(30) Priority: 30.09.2022 JP 2022158819
(71) Applicant: Kyocera Corporation, Kyoto-shi, Kyoto 612-8501 (JP)
(72) Inventor: KUNISADA, So, Kyoto-shi, Kyoto 612-8501 (JP)
(74) Representative: Viering, Jentschura & Partner mbB Patent- und Rechtsanwälte
(86) International application number: PCT/JP2023/035769
(87) International publication number: WO 2024/071416

(57) **Abstract**

An electrochemical cell includes a first electrode layer, a second electrode layer, a solid electrolyte layer, and an intermediate layer. The solid electrolyte layer is located between the first electrode layer and the second electrode layer. The intermediate layer is located between the solid electrolyte layer and the first electrode layer, and contains Ce. The electrochemical cell contains Al in a boundary portion between the solid electrolyte layer and the intermediate layer.

## Description

### TECHNICAL FIELD

The present disclosure relates to an electrochemical cell, an electrochemical cell device, a module, and a module housing device.

### BACKGROUND OF INVENTION

In recent years, various fuel cell stack devices each including a plurality of fuel cells have been proposed, as next-generation energy. A fuel cell is a type of cell capable of providing electrical power by using a fuel gas such as a hydrogen-containing gas and an oxygen-containing gas such as air.

### CITATION LIST

### PATENT LITERATURE

Patent Document 1: JP2017-147030 A

### SUMMARY

An electrochemical cell according to an aspect of an embodiment includes a first electrode layer, a second electrode layer, a solid electrolyte layer, and an intermediate layer. The solid electrolyte layer is located between the first electrode layer and the second electrode layer. The intermediate layer is located between the solid electrolyte layer and the first electrode layer, and contains Ce. The electrochemical cell contains Al in a boundary portion between the solid electrolyte layer and the intermediate layer.

An electrochemical cell device of the present disclosure includes a cell stack including the electrochemical cell described above.

A module of the present disclosure includes the electrochemical cell device described above and a storage container housing the electrochemical cell device.

A module housing device of the present disclosure includes the module described above, an auxiliary device for operating the module, and an external case housing the module and the auxiliary device.

### BRIEF DESCRIPTION OF THE DRAWINGS

FIG. 1A is a horizontal cross-sectional view illustrating an example of an electrochemical cell according to a first embodiment.
FIG. 1B is a side view of an example of the electrochemical cell according to the first embodiment when viewed from the side of an air electrode.
FIG. 1C is a side view of an example of the electrochemical cell according to the first embodiment when viewed from the side of an interconnector.
FIG. 2A is a perspective view illustrating an example of an electrochemical cell device according to the first embodiment.
FIG. 2B is a cross-sectional view taken along a line X-X illustrated in FIG. 2A.
FIG. 2C is a top view illustrating an example of the electrochemical cell device according to the first embodiment.
FIG. 3 is an enlarged cross-sectional view of a region R1 indicated in FIG. 1A.
FIG. 4 is an exterior perspective view illustrating an example of a module according to the first embodiment.
FIG. 5 is an exploded perspective view schematically illustrating an example of a module housing device according to the first embodiment.
FIG. 6 is a cross-sectional view illustrating an example of an electrochemical cell device according to a second embodiment.
FIG. 7 is a horizontal cross-sectional view illustrating an electrochemical cell according to the second embodiment.
FIG. 8 is an enlarged cross-sectional view of a region R2 indicated in FIG. 7.
FIG. 9 is a perspective view illustrating an example of an electrochemical cell according to a third embodiment.
FIG. 10 is a partial cross-sectional view of the electrochemical cell illustrated in FIG. 9.
FIG. 11 is an enlarged cross-sectional view of a region R3 indicated in FIG. 10.
FIG. 12A is a horizontal cross-sectional view illustrating an example of an electrochemical cell according to a fourth embodiment.
FIG. 12B is a horizontal cross-sectional view illustrating another example of the electrochemical cell according to the fourth embodiment.
FIG. 12C is a horizontal cross-sectional view illustrating another example of the electrochemical cell according to the fourth embodiment.
FIG. 13 is an enlarged cross-sectional view of a region R4 indicated in FIG. 12A.

### DESCRIPTION OF EMBODIMENTS

The fuel cell stack device mentioned above has room for improvement in increasing power generation capability.

Provision of an electrochemical cell, an electrochemical cell device, a module, and a module housing device capable of improving performance is expected.

Embodiments of an electrochemical cell, an electrochemical cell device, a module, and a module housing device disclosed in the present application will now be described in detail with reference to the accompanying drawings. Note that the disclosure is not limited by the following embodiments.

Note that the drawings are schematic and that the dimensional relationships between elements, the proportions of the elements, and the like may differ from the actual ones. There may be differences between the drawings in the dimensional relationships, proportions, and the like.

### First Embodiment

### Configuration of Electrochemical Cell

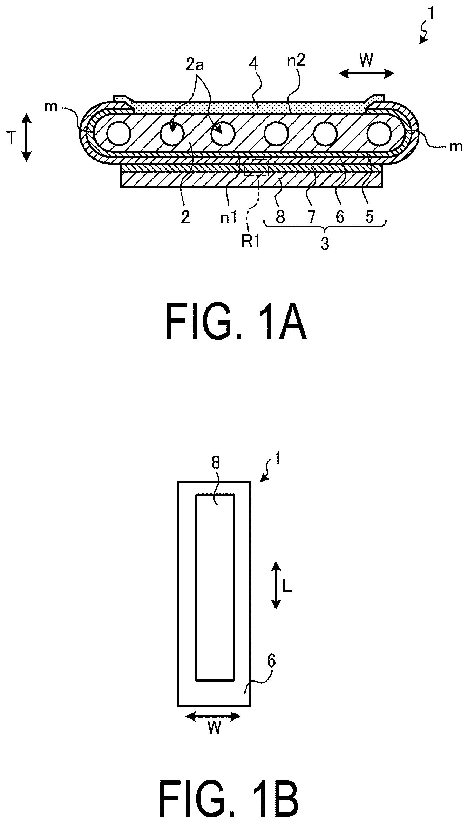

First, with reference to FIGs. 1A to 1C, an example of a solid oxide fuel cell will be described as an electrochemical cell according to a first embodiment. The electrochemical cell device may include a cell stack including a plurality of electrochemical cells. The electrochemical cell device including the plurality of electrochemical cells is simply referred to as a cell stack device.

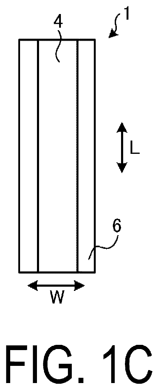

FIG. 1A is a horizontal cross-sectional view illustrating an example of an electrochemical cell according to a first embodiment. FIG. 1B is a side view of an example of the electrochemical cell according to the first embodiment when viewed from the side of an air electrode. FIG. 1C is a side view of an example of the electrochemical cell according to the first embodiment when viewed from the side of an interconnector. Note that FIGs. 1A to 1C are enlarged views each illustrating part of a configuration of the electrochemical cell. Hereinafter, the electrochemical cell may be simply referred to as a cell.

In the example illustrated in FIGs. 1A to 1C, a cell 1 is of a hollow flat plate type, and has an elongated plate shape. As illustrated in FIG. 1B, the overall shape of the cell 1 when viewed from the side is, for example, a rectangle having a side length of from 5 cm to 50 cm in a length direction L and a length of from 1 cm to 10 cm in a width direction W orthogonal to the length direction L. The thickness in a thickness direction T of the entire cell 1 is, for example, from 1 mm to 5 mm.

As illustrated in FIG. 1A, the cell 1 includes a support substrate 2 with electrical conductivity, an element portion 3, and an interconnector 4. The support substrate 2 has a pillar shape having a first surface n1 and a second surface n2 which are a pair of flat surfaces facing each other, and a pair of circular arc-shaped side surfaces m that connect the first surface n1 and the second surface n2.

The element portion 3 is located on the first surface n1 of the support substrate 2. Such an element portion 3 includes a fuel electrode 5, a solid electrolyte layer 6, an intermediate layer 7, and an air electrode 8.

As illustrated in FIG. 1B, the air electrode 8 does not extend to the lower end of the cell 1. At the lower end portion of the cell 1, only the solid electrolyte layer 6 is exposed on a surface of the first surface n1. As illustrated in FIG. 1C, the interconnector 4 may extend to the lower end of the cell 1. At the lower end portion of the cell 1, the interconnector 4 and the solid electrolyte layer 6 are exposed on the surface. Note that, as illustrated in FIG. 1A, on the surface of the pair of the circular arc-shaped side surfaces m of the cell 1, the solid electrolyte layer 6 is exposed. The interconnector 4 need not extend to the lower end of the cell 1.

Hereinafter, each of the members constituting the cell 1 will be described.

The support substrate 2 includes gas-flow passages 2a, inside which gas flows. The example of the support substrate 2 illustrated in FIG. 1A includes six gas-flow passages 2a. The support substrate 2 has gas permeability and allows the fuel gas flowing through the gas-flow passages 2a to pass through to the fuel electrode 5. The support substrate 2 may have electrical conductivity. The support substrate 2 having electrical conductivity collects electricity generated in the element portion 3 to the interconnector 4.

The material of the support substrate 2 includes, for example, an iron group metal component and an inorganic oxide. For example, the iron group metal component may be Ni (nickel) and/or NiO. The inorganic oxide may be, for example, a specific rare earth element oxide. The rare earth element oxide may contain, for example, one or more rare earth elements selected from the group consisting of scandium (Sc), yttrium (Y), lanthanum (La), neodymium (Nd), samarium (Sm), gadolinium (Gd), dysprosium (Dy), and ytterbium (Yb).

As the material of the fuel electrode 5, a commonly known material may be used. As the fuel electrode 5, any of porous electrically conductive ceramics, such as ceramics containing ZrO₂ in which a calcium oxide, a magnesium oxide, or a rare earth element oxide is in solid solution, and Ni and/or NiO may be used. This rare earth element oxide may contain a plurality of rare earth elements, for example, selected from the group consisting of Sc, Y, La, Nd, Sm, Gd, Dy, and Yb. Hereinafter, ZrO₂ in which a calcium oxide, a magnesium oxide, or a rare earth element oxide is in solid solution may be referred to as stabilized zirconia. Stabilized zirconia may also include partially stabilized zirconia.

The solid electrolyte layer 6 is an electrolyte and delivers ions between the fuel electrode 5 and the air electrode 8. At the same time, the solid electrolyte layer 6 has gas blocking properties, and makes a leakage of the fuel gas and the oxygen-containing gas less likely to occur.

The material of the solid electrolyte layer 6 may be, for example, ZrO₂ in which 3 mole% to 15 mole% of a rare earth element oxide is in solid solution. The rare earth element oxide may contain one or more rare earth elements, for example, selected from the group consisting of Sc, Y, La, Nd, Sm, Gd, Dy, and Yb. The solid electrolyte layer 6 may include, for example, ZrO₂ in which Yb, Sc, or Gd is in solid solution, or may include BaZrO₃ in which Sc or Yb is in solid solution.

The intermediate layer 7 functions as a diffusion prevention layer. The intermediate layer 7 makes strontium (Sr) contained in the air electrode 8, which will be described later, less likely to diffuse into the solid electrolyte layer 6, thereby making a resistive layer of SrZrO₃ less likely to be formed on the solid electrolyte layer 6.

The intermediate layer 7 contains cerium (Ce). The material of the intermediate layer 7 includes, for example, cerium oxide (CeO₂) in which a rare earth element except cerium (Ce) is in solid solution. As such rare earth elements, gadolinium (Gd), samarium (Sm), or the like may be used.

The air electrode 8 has gas permeability. The open porosity of the air electrode 8 may be, for example, 20% or more, and particularly may be in a range from 30% to 50%.

The material of the air electrode 8 is not particularly limited, as long as the material is one generally used for the air electrode. The material of the air electrode 8 may be, for example, an electrically conductive ceramic such as a so-called ABO₃ type perovskite oxide.

The material of the air electrode 8 may be, for example, a composite oxide in which strontium (Sr) and lanthanum (La) coexist at the A site. Examples of such a composite oxide include La_{y}Sri₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

The interconnector 4 is dense, and makes, less likely to occur, the leakage of the fuel gas flowing through the gas-flow passages 2a located inside the support substrate 2, and of the oxygen-containing gas flowing outside the support substrate 2. The interconnector 4 may have a relative density of 93% or more, particularly 95% or more.

As the material of the interconnector 4, a lanthanum chromite-based perovskite oxide (LaCrO₃-based oxide), a lanthanum strontium titanium-based perovskite oxide (LaSrTiO₃-based oxide), or the like may be used. These materials have electrical conductivity, and are unlikely to be reduced and also unlikely to be oxidized even when brought into contact with a fuel gas such as a hydrogen-containing gas and an oxygen-containing gas such as air.

### Configuration of Electrochemical Cell Device

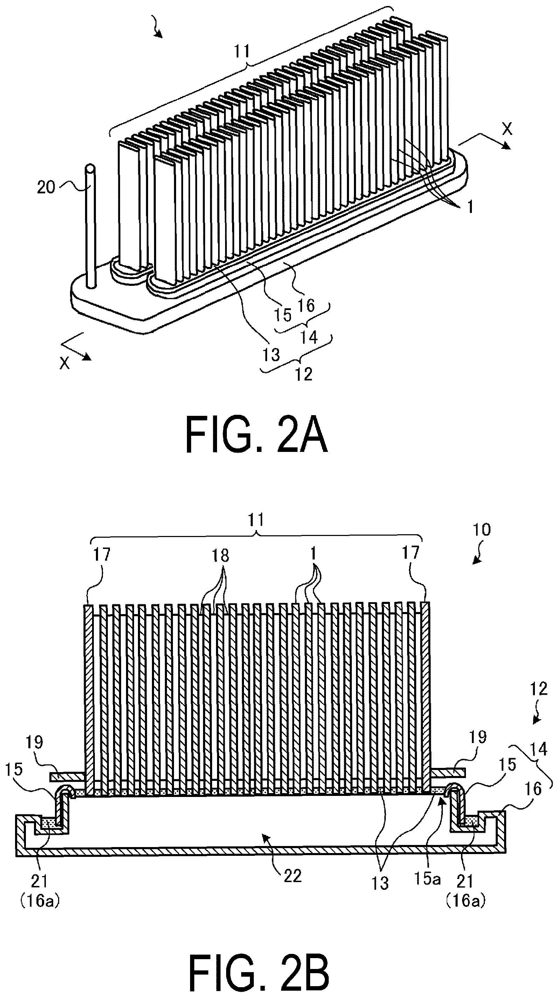

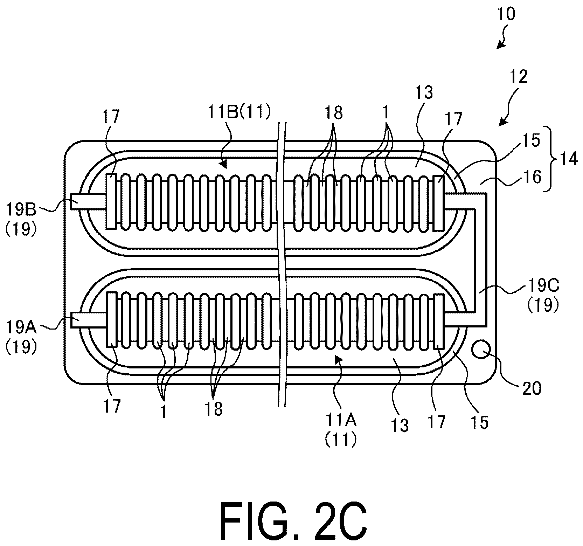

An electrochemical cell device according to the present embodiment using the cell 1 described above will be described with reference to FIGs. 2A to 2C. FIG. 2A is a perspective view illustrating an example of an electrochemical cell device according to the first embodiment. FIG. 2B is a cross-sectional view taken along a line X-X illustrated in FIG. 2A. FIG. 2C is a top view illustrating an example of the electrochemical cell device according to the first embodiment.

As illustrated in FIG. 2A, the cell stack device 10 includes a cell stack 11 including a plurality of the cells 1 arrayed (stacked) in the thickness direction T of each cell 1, and a fixing member 12 (see FIG. 1A).

The fixing member 12 includes a fixing material 13 and a support member 14. The support member 14 supports the cells 1. The fixing material 13 fixes the cells 1 to the support member 14. The support member 14 includes a support body 15 and a gas tank 16. The support body 15 and the gas tank 16, which constitute the support member 14, are made of metal.

As illustrated in FIG. 2B, the support body 15 includes an insertion hole 15a into which the lower end portions of the plurality of cells 1 are inserted. The lower end portions of the plurality of cells 1 and the inner wall of the insertion hole 15a are bonded with the fixing material 13.

The gas tank 16 includes an opening portion through which a reactive gas is supplied to the plurality of cells 1 via the insertion hole 15a, and a recessed groove 16a located on the periphery of the opening portion. The outer peripheral end portion of the support body 15 is bonded to the gas tank 16 by a bonding material 21 with which the recessed groove 16a of the gas tank 16 is filled.

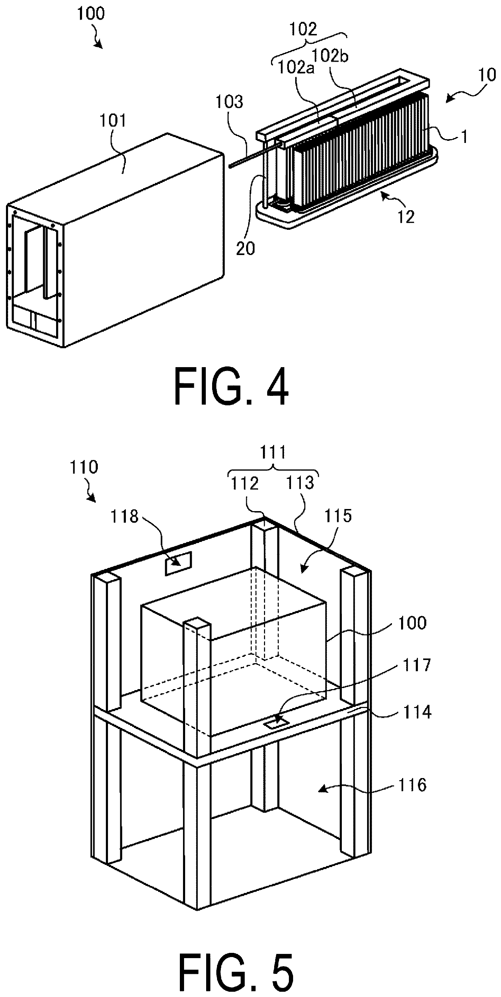

In the example illustrated in FIG. 2A, the fuel gas is stored in an internal space 22 formed by the support body 15 and the gas tank 16, constituting the support member 14. The gas tank 16 includes a gas circulation pipe 20 connected thereto. The fuel gas is supplied to the gas tank 16 through the gas circulation pipe 20 and is supplied from the gas tank 16 to the gas-flow passages 2a (see FIG. 1A) inside the cells 1. The fuel gas to be supplied to the gas tank 16 is produced in a reformer 102 (see FIG. 4) which will be described later.

A hydrogen-rich fuel gas can be produced, for example, by steam-reforming a raw fuel. When the fuel gas is produced by steam-reforming, the fuel gas contains steam.

In the example illustrated in FIG. 2A, two rows of the cell stacks 11, two support bodies 15, and the gas tank 16 are provided. Each of the two rows of the cell stacks 11 includes the plurality of cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is constituted by a single gas tank 16 and two support bodies 15.

The insertion hole 15a has, for example, an oval shape in a top surface view. The length of the insertion hole 15a in an arrangement direction of the cells 1, that is, the thickness direction T, is longer than the distance between two end current collection members 17 located at both ends of the cell stack 11, for example. The width of the insertion hole 15a is, for example, greater than the length of the cell 1 in the width direction W (see FIG. 1A).

As illustrated in FIG. 2B, the joined portions between the inner wall of the insertion hole 15a and the lower end portions of the cells 1 are filled with the fixing material 13, which is solidified. As a result, the inner wall of the insertion hole 15a and the lower end portions of the plurality of cells 1 are bonded and fixed, and the lower end portions of the cells 1 are bonded and fixed to each other. The gas-flow passages 2a of each of the cells 1 communicate, at the lower end portion, with the internal space 22 of the support member 14.

The fixing material 13 and the bonding material 21 may be the one having a low electrical conductivity, such as glass. As the specific materials of the fixing material 13 and the bonding material 21, amorphous glass or the like may be used, and especially, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, an SiO₂-MgO-based material may be used.

As illustrated in FIG. 2B, a connecting member 18 is interposed between adjacent cells 1 of the plurality of cells 1. Each of the connecting members 18 electrically connects in series the fuel electrode 5 of one of adjacent ones of the cells 1 with the air electrode 8 of the other of the adjacent ones of the cells 1. More specifically, each of the connecting members 18 connects the interconnector 4 electrically connected to the fuel electrode 5 of the one of the adjacent ones of the cells 1 and the air electrode 8 of the other of the adjacent ones of the cells 1.

As illustrated in FIG. 2B, the end current collection members 17 are electrically connected to the cells 1 located at the outermost sides in the arrangement direction of the plurality of cells 1. The end current collection members 17 are each connected to an electrically conductive portion 19 protruding outward from the cell stack 11. The electrically conductive portion 19 collects electricity generated by the cells 1 and conducts the electricity to the outside. Note that in FIG. 2A, the end current collection members 17 are not illustrated.

As illustrated in FIG. 2C, the cell stack device 10 may be a single battery in which two cell stacks 11A and 11B are connected in series. In such a case, the electrically conductive portion 19 of the cell stack device 10 is divided into a positive electrode terminal 19A, a negative electrode terminal 19B, and a connection terminal 19C.

The positive electrode terminal 19A functions as a positive electrode when the electrical power generated by the cell stack 11 is output to the outside. The positive electrode terminal 19A is electrically connected to the end current collection member 17 on a positive electrode side in the cell stack 11A. The negative electrode terminal 19B functions as a negative electrode when the electrical power generated by the cell stack 11 is output to the outside. The negative electrode terminal 19B is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

### Details of Element Portion

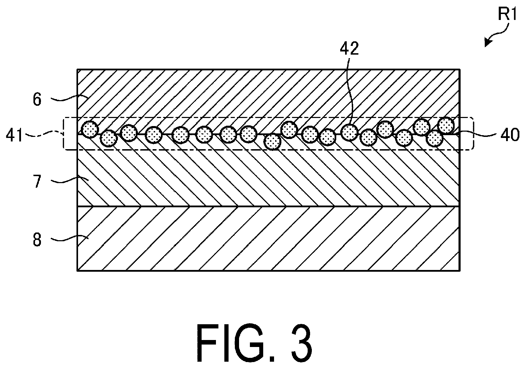

Subsequently, details of the element portion 3 included in the electrochemical cell according to the first embodiment will be described in detail with reference to FIG. 3. FIG. 3 is an enlarged cross-sectional view of the region R1 indicated in FIG. 1A.

As illustrated in FIG. 3, the cell 1 contains Al in a boundary portion 41 between the solid electrolyte layer 6 and the intermediate layer 7. The boundary portion 41 is a region including a boundary 40 between the solid electrolyte layer 6 and the intermediate layer 7 and having a distance of 100 nm or less, with respect to the boundary 40, in the thickness direction intersecting the boundary 40. At the boundary 40, the detected amount (atomic%) of Zr and the detected amount (atomic%) of Ce are equal in the elemental analysis. The boundary portion 41 may contain, for example, Al₂O₃.

Since the boundary portion 41 between the solid electrolyte layer 6 and the intermediate layer 7 contains Al, the Zr component contained in the solid electrolyte layer 6 and the Ce component contained in the intermediate layer 7 are less likely to diffuse into each other, for example, at the time of manufacturing of the element portion 3 or at high temperatures. As a result, the generation of insulating compositions containing Zr and Ce in the solid electrolyte layer 6 and/or the intermediate layer 7 is suppressed, and the power generation capability of the cell 1 can be improved. The content of Al contained in the boundary portion 41 may be equal to or more than the detection limit. The composition of the boundary portion 41 can be measured, for example, by using a scanning electron microscope (SEM), or a transmission electron microscope (TEM), and an energy dispersive X-ray analyzer (EDX) to examine the cross-section of the element portion 3.

For example, a sample of the present embodiment containing Al in the boundary portion 41 and another sample not containing Al in the boundary portion 41 were prepared, and the line analysis of elements was performed on both sides of the boundary portion 41 using the TEM and the EDX. In the sample of the present embodiment, Al was detected at a maximum of 4 atomic% in the boundary portion 41, and the thickness of the portions containing 10 atomic% or more of both Ce and Zr was substantially 100 nm. On the other hand, in the other sample, Al was not detected in the boundary portion 41, and the thickness of the portions containing 10 atomic% or more of both Ce and Zr was substantially 300 nm. The portion containing 10 atomic% or more of both Ce and Zr may generally be regarded as an insulating composition containing Zr and Ce.

The boundary portion 41 may contain Al uniformly over the entire boundary portion 41 or may have a portion where Al is not located. The solid electrolyte layer 6 and/or the intermediate layer 7 other than the boundary portion 41 may contain Al.

The boundary portion 41 may have a solid solution portion 42 containing Al. The solid solution portion 42 may have, for example, a solid solution of Al₂O₃ and ZrO₂, or a solid solution of Al₂O₃ and CeO₂. The solid solution portion 42 may have a solid solution of Al₂O₃, ZrO₂, and CeO₂.

Thus, the configuration containing Al in the boundary portion 41 between the solid electrolyte layer 6 and the intermediate layer 7 can be formed by, for example, sandwiching an Al component such as Al₂O₃ between the materials of the solid electrolyte layer 6 and the intermediate layer 7 and sintering them. However, the method of forming the boundary portion 41 and the solid solution portion 42 is not limited, and the boundary portion 41 and the solid solution portion 42 may be formed by any method.

### Module

A module according to an embodiment of the present disclosure using the electrochemical cell device described above will be described with reference to FIG. 4. FIG. 4 is an exterior perspective view illustrating a module according to the first embodiment. FIG. 4 illustrates a state in which the front and rear surfaces, which constitute part of a storage container 101, are removed, and the cell stack device 10 of the fuel cell stored inside is taken out rearward.

As illustrated in FIG. 4, the module 100 includes the storage container 101 and the cell stack device 10 stored in the storage container. The reformer 102 is disposed above the cell stack device 10.

The reformer 102 generates a fuel gas by reforming a raw fuel such as natural gas and kerosene and supplies the fuel gas to the cell 1. The raw fuel is supplied to the reformer 102 through a raw fuel supply pipe 103. Note that the reformer 102 may include a vaporizing unit 102a for vaporizing water and a reformer 102b. The reformer 102b includes a reforming catalyst (not illustrated) to reform the raw fuel into a fuel gas. The reformer 102 can perform steam-reforming, which is a highly efficient reformation reaction.

The fuel gas generated by the reformer 102 is supplied to the gas-flow passages 2a of the cell 1 (see FIG. 1A) through the gas circulation pipe 20, the gas tank 16, and the support member 14.

In the module 100 having the configuration mentioned above, the temperature in the module 100 during normal power generation is from about 500°C to 1000°C due to combustion of gas and power generation by the cell 1.

In such a module 100, as described above, the module 100 with improved power generation capability can be provided by housing the cell stack device 10 with the improved power generation capability.

### Module Housing Device

FIG. 5 is an exploded perspective view illustrating an example of a module housing device according to the first embodiment. A module housing device 110 according to the present embodiment includes an external case 111, the module 100 illustrated in FIG. 4, and an auxiliary device (not illustrated). The auxiliary device operates the module 100. The module 100 and the auxiliary device are housed in the external case 111. Note that part of the configuration is not illustrated in FIG. 5.

The external case 111 of the module housing device 110 illustrated in FIG. 5 includes a support 112 and an external plate 113. A dividing plate 114 vertically partitions the interior of the external case 111. The space above the dividing plate 114 in the external case 111 is a module housing chamber 115 for housing the module 100. The space below the dividing plate 114 in the external case 111 is an auxiliary device housing chamber 116 for housing the auxiliary device configured to operate the module 100. Note that, in FIG. 5, the auxiliary device housed in the auxiliary device housing chamber 116 is not illustrated.

The dividing plate 114 includes an air circulation hole 117 for causing air in the auxiliary device housing chamber 116 to flow to the module housing chamber 115 side. The external plate 113 constituting the module housing chamber 115 has an exhaust hole 118 for discharging air inside the module housing chamber 115.

In such a module housing device 110, as described above, the module housing device 110 with improved power generation capability can be provided by having the module 100 with improved power generation capability in the module housing chamber 115.

Note that, in the embodiment described above, the case in which the support substrate having the hollow flat plate shape is used has been exemplified, but the embodiment can also be applied to a cell stack device using a cylindrical support substrate.

### Second Embodiment

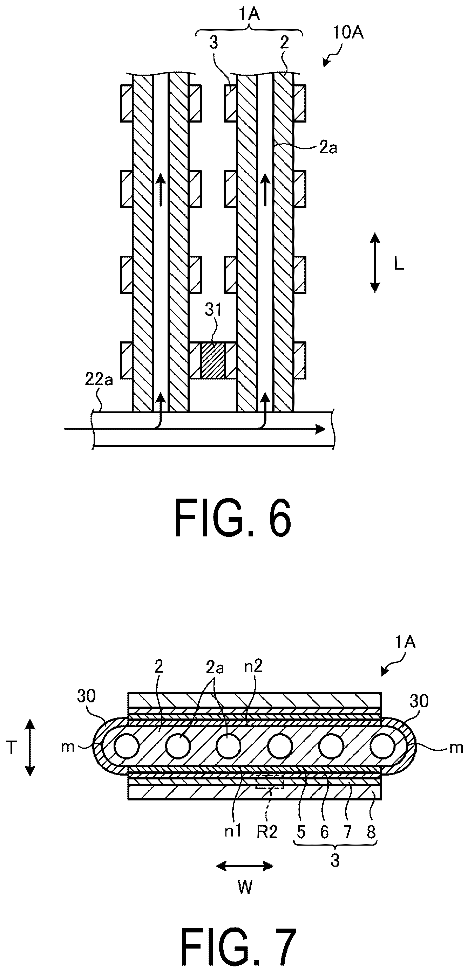

Next, an electrochemical cell and an electrochemical cell device according to a second embodiment will be described with reference to FIGs. 6 to 8.

In the embodiment described above, a so-called "vertically striped type" cell stack device, in which only one element portion including a fuel electrode, a solid electrolyte layer, and an air electrode is provided on the surface of the support substrate, is exemplified. However, the present disclosure can be applied to a horizontally striped type electrochemical cell device with an array of so-called "horizontally striped type" electrochemical cells, in which a plurality of element portions are provided on the surface of a support substrate at mutually separated locations and adjacent element portions are electrically connected to each other.

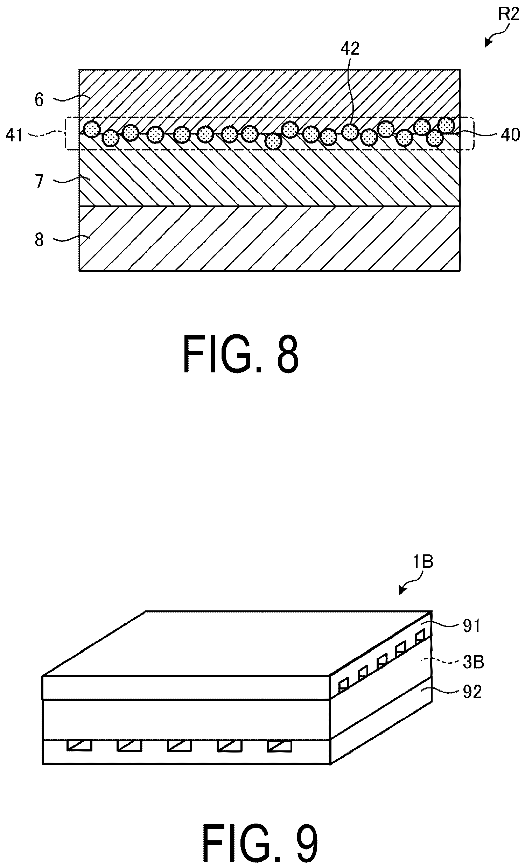

FIG. 6 is a cross-sectional view illustrating an example of an electrochemical cell device according to a second embodiment. FIG. 7 is a horizontal cross-sectional view illustrating an electrochemical cell according to the second embodiment. FIG. 8 is an enlarged view of a region R2 illustrated in FIG. 7.

As illustrated in FIG. 7, a cell stack device 10A includes a plurality of cells 1A extending in the length direction L from a pipe 22a that distributes a fuel gas. Each of the cells 1A includes a plurality of the element portions 3 on the support substrate 2. A gas-flow passage 2a, through which a fuel gas from the pipe 22a flows, is provided inside the support substrate 2.

The cells 1A are electrically connected to each other via connecting members 31. Each of the connecting members 31 is located between the element portions 3 each included in a corresponding one of the cells 1A and electrically connects adjacent ones of the cells 1A to each other.

As illustrated in FIG. 7, the cell 1A according to the second embodiment includes the support substrate 2, a pair of the element portions 3, and a sealing portion 30. The support substrate 2 has a pillar shape having a first surface n1 and a second surface n2 which are a pair of flat surfaces facing each other, and a pair of circular arc-shaped side surfaces m that connect the first surface n1 and the second surface n2.

The pair of element portions 3 is located on the first surface n1 and the second surface n2 of the support substrate 2 so as to face each other. The sealing portion 30 is located to cover the side surfaces m of the support substrate 2.

As illustrated in FIG. 8, the boundary portion 41 between the solid electrolyte layer 6 and the intermediate layer 7 contains Al. The boundary portion 41 is a region including the boundary 40 between the solid electrolyte layer 6 and the intermediate layer 7 and having a distance of 100 nm or less, with respect to the boundary 40, in the thickness direction intersecting the boundary 40. The boundary portion 41 may contain, for example, Al₂O₃. The boundary portion 41 may include a solid solution portion 42 containing Al.

In this way, containing Al at the boundary portion 41 between the solid electrolyte layer 6 and the intermediate layer 7 makes it difficult for the Zr component in the solid electrolyte layer 6 and the Ce component in the intermediate layer 7 to diffuse into each other, for example, at the time of the manufacture of the element portion 3 or at high temperatures. As a result, the generation of insulating compositions containing Zr and Ce in the solid electrolyte layer 6 and/or the intermediate layer 7 is suppressed, and the power generation capability of cell 1A can be improved.

### Third Embodiment

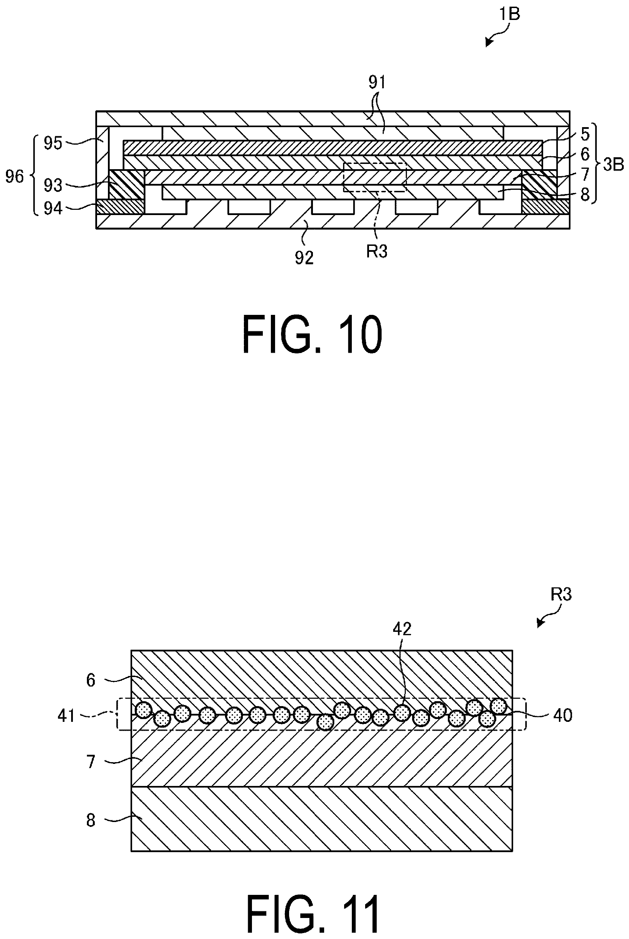

FIG. 9 is a perspective view illustrating an example of an electrochemical cell according to a third embodiment. FIG. 10 is a partial cross-sectional view of the electrochemical cell illustrated in FIG. 9.

As illustrated in FIGs. 9 and 10, a cell 1B includes an element portion 3B, in which the fuel electrode 5, the solid electrolyte layer 6, the intermediate layer 7, and the air electrode 8 are layered, and the electrically conductive members 91, 92. In an electrochemical cell device in which a plurality of flat plate cells are layered, for example, a plurality of cells 1B are electrically connected by electrically conductive members 91 and 92, which are metal layers adjacent to each other. The electrically conductive members 91 and 92 electrically connect adjacent ones of the cells 1B to each other, and each include gas-flow passages for supplying gas to the fuel electrode 5 or the air electrode 8.

As illustrated in FIG. 10, the cell 1B includes a sealing material for hermetically sealing the flow passage of a fuel gas and the flow passage of an oxygen-containing gas in the flat plate cell stack. The sealing material is a fixing member 96 of the cell, and includes a bonding material 93, and support members 94 and 95, which constitute a frame. The bonding material 93 may be a glass or may be a metal material such as silver solder.

The support member 94 may be a so-called separator that separates the flow passage of the fuel gas and the flow passage of the oxygen-containing gas. The material of the support members 94 and 95 may be, for example, an electrically conductive metal, or may be an insulating ceramic. One or both of the support members 94, 95 may be an insulating material. When the support member 94 is a metal member, the support member 94 may be formed integrally with the electrically conductive member 92. When the support member 95 is a metal member, the support member 95 may be formed integrally with the electrically conductive member 91.

One of the bonding material 93 and the support members 94 and 95 has insulating properties and causes the two electrically conductive members 91 and 92 sandwiching the flat plate cell to be electrically insulated from each other.

FIG. 11 is an enlarged cross-sectional view of the region R3 indicated in FIG. 10. As illustrated in FIG. 11, the cell 1B contains Al in the boundary portion 41 between the solid electrolyte layer 6 and the intermediate layer 7. The boundary portion 41 is a region including a boundary 40 between the solid electrolyte layer 6 and the intermediate layer 7 and having a distance of 100 nm or less, with respect to the boundary 40, in the thickness direction intersecting the boundary 40. The boundary portion 41 may contain, for example, Al₂O₃. The boundary portion 41 may include a solid solution portion 42 containing Al.

In this way, containing Al at the boundary portion 41 between the solid electrolyte layer 6 and the intermediate layer 7 makes it difficult for the Zr component in the solid electrolyte layer 6 and the Ce component in the intermediate layer 7 to diffuse into each other, for example, at the time of the manufacture of the element portion 3B or at high temperatures. As a result, the generation of insulating compositions containing Zr and Ce in the solid electrolyte layer 6 and/or the intermediate layer 7 is suppressed, and the power generation capability of cell 1B can be improved.

### Fourth Embodiment

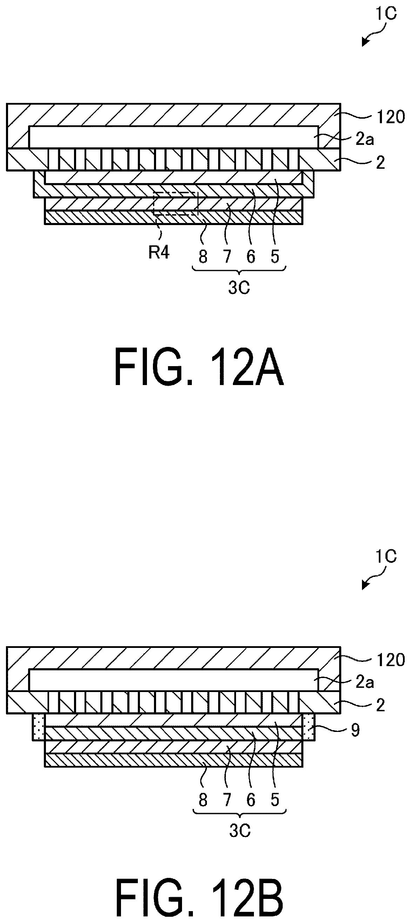

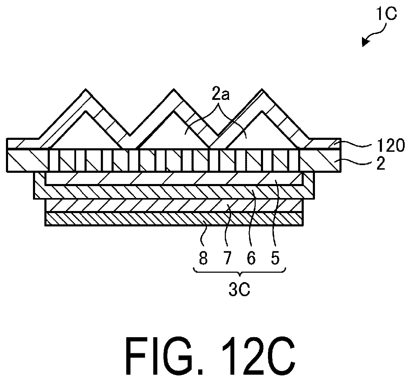

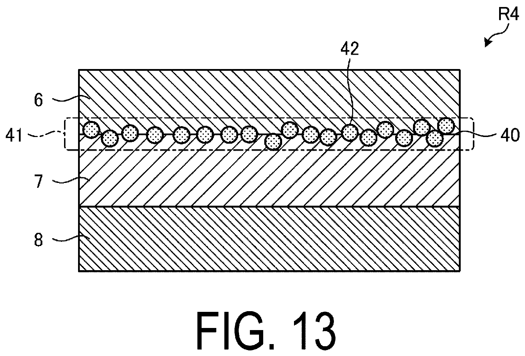

FIG. 12A is a horizontal cross-sectional view illustrating an example of an electrochemical cell according to a fourth embodiment. FIGs. 12B and 12C are horizontal cross-sectional views illustrating another example of the electrochemical cell according to the fourth embodiment. FIG. 13 is an enlarged view of the region R4 illustrated in FIG. 12A. Note that, FIG. 13 can also be applied to the examples in FIGs. 12B and 12C.

As illustrated in FIGs. 12A to 12C, a cell 1C includes an element portion 3C in which the fuel electrode 5, the solid electrolyte layer 6, the intermediate layer 7, and the air electrode 8 are layered, and the support substrate 2. The support substrate 2 has through holes or fine holes at a site in contact with the element portion 3, and includes a member 120 located outside the gas-flow passage 2a. The support substrate 2 allows gas to flow between the gas-flow passage 2a and the element portion 3C. The support substrate 2 may be made of, for example, one or more metal plates. A material of the metal plate may contain chromium. The metal plate may include an electrically conductive coating layer. The support substrate 2 electrically connects adjacent ones of the cells 1C to each other. The element portion 3C may be directly formed on the support substrate 2 or may be bonded to the support substrate 2 with a bonding material.

In the example illustrated in FIG. 12A, the side surface of the fuel electrode 5 is coated with the solid electrolyte layer 6 to hermetically seal the gas-flow passage 2a through which the fuel gas flows. As illustrated in FIG. 12B, the side surface of the fuel electrode 5 may be coated with a dense glass or ceramic sealing material 9 and sealed. The sealing material 9 coating the side surface of the fuel electrode 5 may have electrical insulation properties.

The gas-flow passage 2a of the support substrate 2 may be made of the member 120 having unevenness as illustrated in FIG. 12C.

FIG. 13 is an enlarged cross-sectional view of the region R4 indicated in FIG. 12A. As illustrated in FIG. 13, the cell 1C contains Al in the boundary portion 41 between the solid electrolyte layer 6 and the intermediate layer 7. The boundary portion 41 is a region including the boundary 40 between the solid electrolyte layer 6 and the intermediate layer 7 and having a distance of 100 nm or less, with respect to the boundary 40, in the thickness direction intersecting the boundary 40. The boundary portion 41 may contain, for example, Al₂O₃. The boundary portion 41 may include a solid solution portion 42 containing Al.

In this way, containing Al at the boundary portion 41 between the solid electrolyte layer 6 and the intermediate layer 7 makes it difficult for the Zr component in the solid electrolyte layer 6 and the Ce component in the intermediate layer 7 to diffuse into each other, for example, at the time of the manufacture of the element portion 3C or at high temperatures. As a result, the generation of insulating compositions containing Zr and Ce in the solid electrolyte layer 6 and/or the intermediate layer 7 is suppressed, and the power generation capability of cell 1C can be improved.

### Other Embodiments

An electrochemical cell device according to other embodiments will be described.

In the above embodiments, a fuel cell, a fuel cell stack device, a fuel cell module, and a fuel cell device are illustrated as examples of the "electrochemical cell", the "electrochemical cell device", the "module", and the "module housing device", respectively, but in other examples, they may be an electrolyte cell, an electrolyte cell stack device, an electrolyte module, and an electrolyte device. The electrolytic cell includes a first electrode layer and a second electrode layer, and decomposes water vapor into hydrogen and oxygen or decomposes carbon dioxide into carbon monoxide and oxygen by supplying electric power. Although an oxide ion conductor or a hydrogen ion conductor is illustrated as an example of the electrolyte material of the electrochemical cell in each of the above embodiments, the electrolyte material may be a hydroxide ion conductor. Such an electrolytic cell, an electrolytic cell stack device, an electrolytic module, and an electrolytic device can have an improved electrolytic performance.

While the present disclosure has been described in detail, the present disclosure is not limited to the aforementioned embodiments, and various changes, improvements, and the like can be made without departing from the gist of the present disclosure.

In an embodiment,
(1) an electrochemical cell includes a first electrode layer, a second electrode layer, a solid electrolyte layer, and an intermediate layer. The solid electrolyte layer is located between the first electrode layer and the second electrode layer. The intermediate layer is located between the solid electrolyte layer and the first electrode layer, and contains Ce. The electrochemical cell contains Al in a boundary portion between the solid electrolyte layer and the intermediate layer.
(2) In the electrochemical cell as recited in (1) above, the solid electrolyte layer may contain Zr.
(3) In the electrochemical cell as recited in (1) or (2) above,
   the boundary portion includes a solid solution portion including one or more metal elements contained in the solid electrolyte layer and one or more metal elements contained in the intermediate layer, and
   the solid solution portion may contain Al.
(4) An electrochemical cell device includes a cell stack including the electrochemical cell as recited in any one of (1) to (3) above.
(5) A module includes
   the electrochemical cell device as recited in (4) above, and
   a storage container housing the electrochemical cell device.
(6) A module housing device includes
   the module as recited in (5) above,
   an auxiliary device configured to operate the module, and
   an external case housing the module and the auxiliary device.

Note that the embodiments disclosed herein are exemplary in all respects and not restrictive. The aforementioned embodiments can be embodied in a variety of forms. The above-described embodiments may be omitted, substituted or modified in various forms without departing from the scope and spirit of the appended claims.

### REFERENCE SIGNS

1, 1A to 1C Cell
2 Support substrate
3 Element portion
4 Interconnector
5 Fuel electrode
6 Solid electrolyte layer
7 Intermediate layer
8 Air electrode
10 Cell stack device
11 Cell stack
12 Fixing member
13 Fixing material
14 Support member
15 Support body
16 Gas tank
17 End current collection member
18 Connecting member
41 Boundary portion
42 Solid solution portion
100 Module
110 Module housing device

## Claims

1. An electrochemical cell comprising:
a first electrode layer;
a second electrode layer;
a solid electrolyte layer located between the first electrode layer and the second electrode layer;
an intermediate layer located between the solid electrolyte layer and the first electrode layer, and containing Ce; and
wherein a boundary portion between the solid electrolyte layer and the intermediate layer contains Al.

2. The electrochemical cell according to claim 1,
wherein the solid electrolyte layer contains Zr.

3. The electrochemical cell according to claim 1 or 2,
wherein
the boundary portion comprises a solid solution portion comprising:
one or more metal elements contained in the solid electrolyte layer; and
one or more metal elements contained in the intermediate layer, and
the solid solution portion contains Al.

4. An electrochemical cell device comprising:
a cell stack comprising the electrochemical cell according to any one of claims 1 to 3.

5. A module comprising:
the electrochemical cell device according to claim 4; and
a storage container housing the electrochemical cell device.

6. A module housing device comprising:
the module according to claim 5;
an auxiliary device configured to operate the module; and
an external case housing the module and the auxiliary device.
